# EUROPEAN PATENT SPECIFICATION

(11) **EP 3 892 813 B1**
(45) Date of publication and mention of the grant of the patent: **08.11.2023**
(21) Application number: 19892460.7
(22) Date of filing: 03.12.2019
(51) Int. Cl.: E06B 9/264, E06B 9/386, E06B 5/00

(54) **SOLAR BATTERY BLIND**
JALOUSIE MIT SOLARBATTERIE
STORE À BATTERIE SOLAIRE

(30) Priority: 04.12.2018 JP 2018227054
(43) Date of publication of application: 13.10.2021
(73) Proprietor: LIXIL Corporation, Tokyo 141-0033 (JP)
(72) Inventor: ISHII, Hisashi, Tokyo 141-0033 (JP)
(74) Representative: karo IP
(86) International application number: PCT/JP2019/047122
(87) International publication number: WO 2020/116413

(56) References cited:
- AT-U1- 11 700
- JP-A- 2000 340 824
- JP-A- 2017 179 914
- JP-A- 2017 179 914
- JP-B2- 6 088 830
- US-A1- 2011 048 656

## Description

### TECHNICAL FIELD

The present invention relates to a solar cell blind.

### BACKGROUND ART

To achieve a further increase in energy efficiency, solar cell blinds including slats and solar cells (thin film-shaped solar cell modules PV) integrally attached to sunlightreceiving surfaces of the slats have been proposed and put into use (see, for example, Patent Documents 1 and 2).

The solar cell blind includes a plurality of slats each provided with a plurality of solar cells integrated with the slat, and is configured to convert a DC voltage of electric power generated by photovoltaic effect of the solar cells into a predetermined AC voltage, so that the solar cell blind can be used in coordination with a commercial power system.

Patent Document 1: Japanese Unexamined Patent Application, Publication No. 2000-340824
Patent Document 2: Japanese Unexamined Patent Application, Publication No. 2017-179914

### DISCLOSURE OF THE INVENTION

### Problems to be Solved by the Invention

However, the known solar cell blinds may cause a situation in which wires, such as lead wires, through which the electric power generated by the solar cells is extracted and supplied to a load, become bulky or entangled complicatedly when the slats have been raised and gathered, and may give rise to the risk of damage to the wires, such as the lead wires, in some cases.

It is an object of the present invention to provide a solar cell blind enabling suitable extraction of electric power generated by solar cells provided to slats.

### Means for Solving the Problems

The present inventor has developed a process enabling suitable extraction of electric power generated by solar cells provided to slats, and has achieved the present invention.

The present invention include: a plurality of slats arranged in a vertical direction; a solar cell integrated with the slat; a pair of electrodes electrically connected to the solar cell and laterally projecting from two side ends of the slat; a pair of guide rails each holding an associated one of the pair of electrodes such that the electrodes are slidable in the vertical direction; wires fixedly arranged on the guide rails and configured to be electrically connected to the solar cell via the electrodes; and a current conduction state-switching mechanism configured to switch the electrodes and the wires between an electrical contact state and a non-contact state according to an angle of the slats.

The electrode may include a covering connector provided to cover the side end of the slat, an electrode shaft laterally projecting from the side end of the slat, the electrode shaft being fixed to and integrated with the slat, and slidably supported by the guide rail, and an extraction electrode part integrated with the electrode shaft while having an axis thereof being coaxial with that of the electrode shaft, the extraction electrode part forming the current conduction state-switching mechanism. The extraction electrode part may have an axially symmetric shape, and may have a width dimension in one direction that extends across the axis and is perpendicular to the axis and a width dimension in an other direction that extends across the axis and is perpendicular to the one direction, the width dimension in the one direction being smaller than the width dimension in the other direction. Outer peripheral regions of the extraction electrode part in the other direction may be configured to come into electrical contact with the wires according to the angle of the slats.

The present invention may further include an outer frame disposed to cover the guide rail and at least the extraction electrode part of the electrode.

### Effects of the Invention

The present invention makes it possible to further suitably extract electric power generated by solar cells provided to slats, in comparison with the know art.

### BRIEF DESCRIPTION OF THE DRAWINGS

FIG. 1 is a front view of a solar cell blind according to an embodiment of the present invention;
FIG. 2 is a cross-sectional plan view of a solar cell blind according to an embodiment of the present invention;
FIG. 3 is a front view of a slat of a solar cell blind according to an embodiment of the present invention;
FIG. 4 is a cross-sectional view of a slat of a solar cell blind according to an embodiment of the present invention;
FIG. 5 is a diagram (front view) illustrating connection between lead wires (wires) and electrodes of a solar cell blind according to an embodiment of the present invention, as viewed from the exterior of a room;
FIG. 6 is a diagram (rear view) illustrating connection between lead wires (wires) and electrodes of a solar cell blind according to an embodiment of the present invention, as viewed from the interior of a room;
FIG. 7 is a diagram illustrating a modification of a guide rail of a solar cell blind according to an embodiment of the present invention;
FIG. 8 is a diagram illustrating a modification of a guide rail of a solar cell blind according to an embodiment of the present invention;
FIG. 9 is a diagram of electrodes (extraction electrode parts) of a solar cell blind according to an embodiment of the present invention, and illustrates contact and non-contact states in which the electrodes are in and out of contact with lead wires (wires) in accordance with an angle of slats;
FIG. 10 is a diagram of a modification of electrodes (extraction electrode parts) of a solar cell blind according to an embodiment of the present invention, and illustrates contact and non-contact states in which the electrodes are in and out of contact with lead wires (wires) in accordance with an angle of slats;
FIG. 11 is a diagram of a modification of electrodes (extraction electrode parts) of a solar cell blind according to an embodiment of the present invention, and illustrates contact and non-contact states in which the electrodes are in and out of contact with lead wires (wires) in accordance with an angle of slats; and
FIG. 12 is a diagram of a modification of electrodes (extraction electrode parts) of a solar cell blind according to an embodiment of the present invention, and illustrates contact and non-contact states in which the electrodes are in and out of contact with lead wires (wires) in accordance with an angle of slats.

### PREFERRED MODE FOR CARRYING OUT THE INVENTION

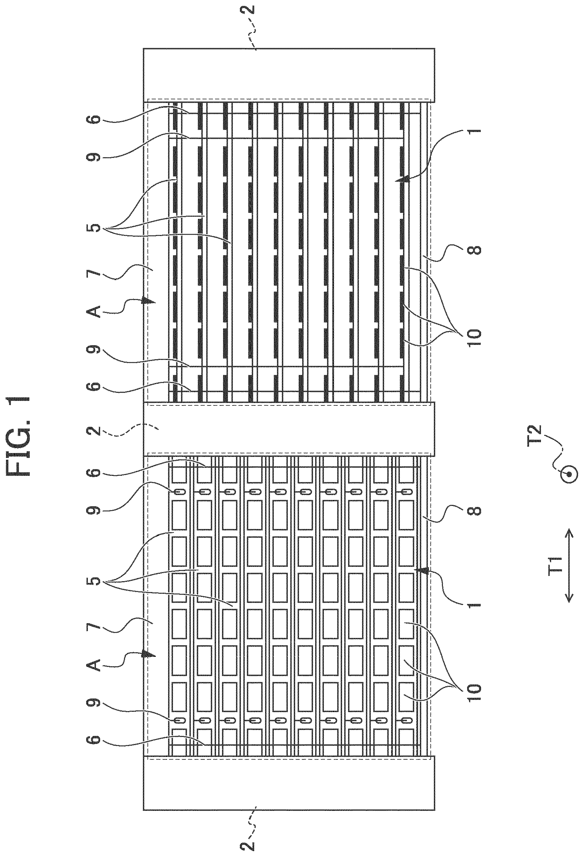

A solar cell blind according to an embodiment of the present invention will be described with reference to FIGS. 1 to 12.

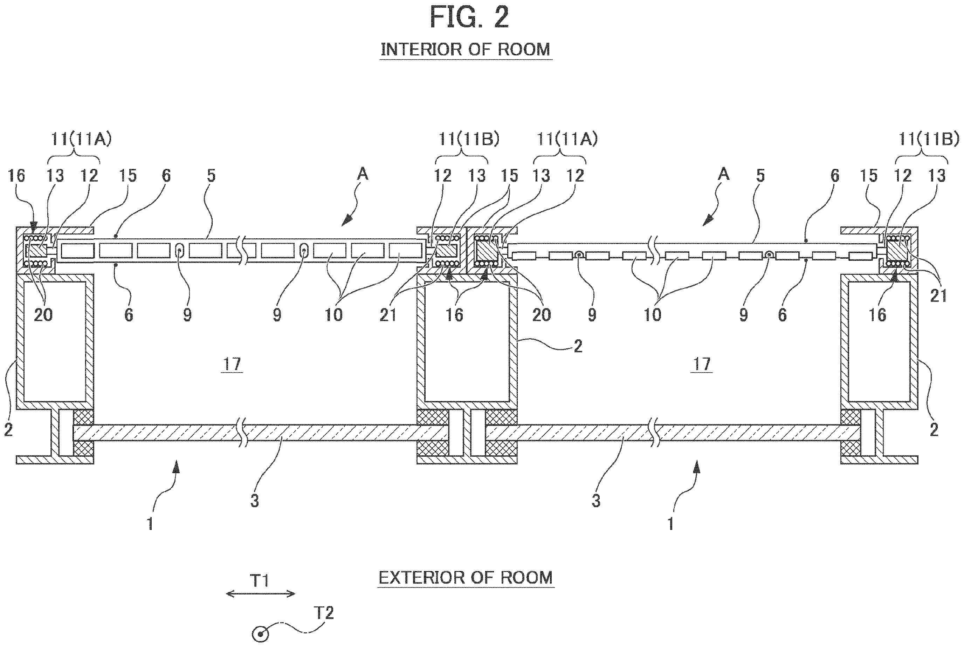

The solar cell blind of the present embodiment can be installed on a building, an example of which includes an office building including a curtain wall. Such a building has, for example, exterior wall openings 1 that are provided with mullions 2 and glass panels 3 attached on exterior sides of the mullions 2 (see FIGS. 1 and 2).

As illustrated in FIGS. 1 and 2, the solar cell blind A is disposed adjacent to the interior sides of the mullions 2 that delimit the exterior wall opening 1, i.e., the solar cell blind A is closer than the glass panel 3 to the interior of the room. Just like known blinds, the solar cell blind A includes a plurality of slats 5, ladder cords 6, a head box 7, and a bottom rail 8. The three ladder cords 6 suspended from the head box 7 support the plurality of slats 5 in alignment.

The solar cell blind A of the present embodiment is configured such that the plurality of slats 5 can be turned by moving a front cord and a back cord of each of the ladder cords 6relative to each other. In this way the plurality of slats 5 can be switched between a substantially vertical position, an inclined position, and a horizontal position. Lift cords 9 are suspended from the head box 7, extend along the side edges of the slats, and are coupled to a bottom rail 8 disposed below the lowermost slat 5. The lift cords 9 are operable to vertically raise and lower the solar cell blind A (the plurality of slats 5) so as to open and close the solar cell blind A.

The plurality of slats 5 are the same in shape and size. The slats 5 all have the shape of a substantially rectangular strip, and are arranged such that a longitudinal direction thereof is parallel to a horizontal lateral direction T1. When the blind A is in a closed state (when the plurality of slats 5 are in a closed position), the slats 5 are aligned to be adjacent to each other in a vertical direction T2 such that each slat 5 has an upper end portion slightly overlapping with a lower end portion of the upwardly adjacent slat 5 while having a lower end portion slightly overlapping with an upper end portion of the downwardly adjacent slat 5.

The head box 7 constitutes an uppermost portion of the blind A, and is fixedly mounted to, for example, a window frame or a ceiling via a bracket. The head box 7 houses, for example, an angle adjustment mechanism and a raising-lowering mechanism that are configured to move the slats 5. For example, in the head box 7, a rotary drum (not illustrated) is provided, to which an upper end of the ladder cord 6 is coupled. Rotation of the rotary drum moves and inclines the ladder cord 6. The rotary drum is configured to be rotated by way of rotational operation of an operation rod provided adjacent to one side of the head box 7, whereby the ladder cord 6 is moved and inclined.

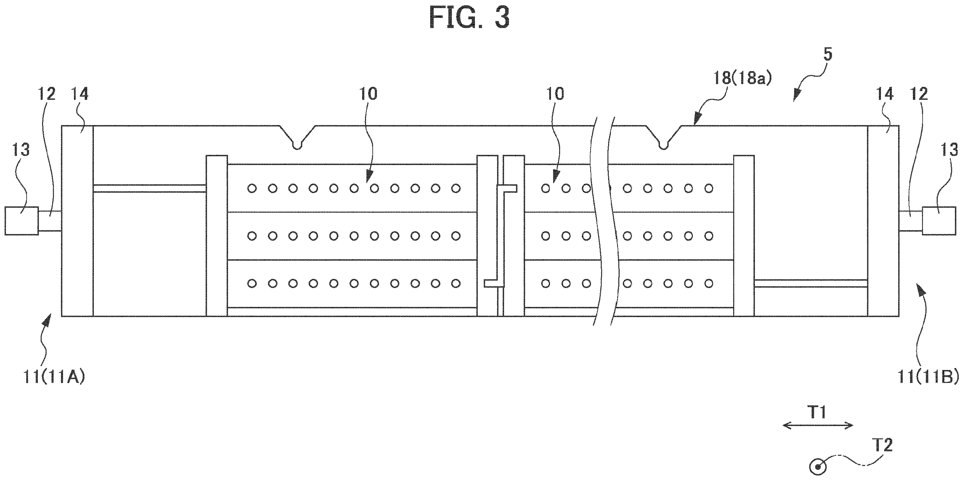

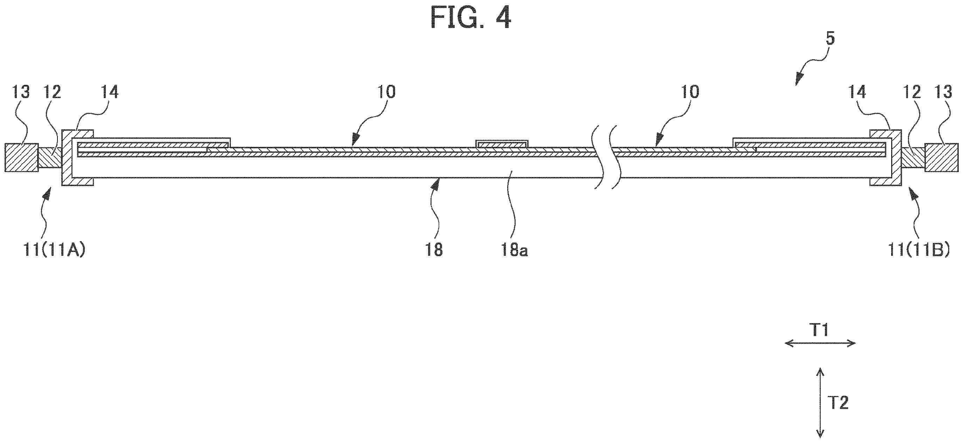

The solar cell blind A of the present embodiment includes a plurality of solar cells (PV cells) 10 provided integrally with each of the slats 5. The solar cells 10 are arranged in a longitudinal direction of the slat 5 with predetermined intervals. The plurality of solar cells 10 provided to each slat 5 are electrically connected in series to each other. Note that the plurality of solar cells 10 provided to each slat 5 may be electrically connected in parallel. Specifically, as illustrated in FIGS. 3 and 4, the slat 5 of the present embodiment includes, for example, a slat body 18, the plurality of solar cells (generators) 10 mounted to the slat body 18, and power extraction units (electrode terminals) 11 respectively provided at two longitudinal ends of the slat body 18 and functioning as electrodes through which electric power generated by the solar cells 10 is extracted.

The slat body 18 is formed by, for example, bonding two plate members 18a to each other, the plate members 18a each having the shape of a substantially rectangular strip. One of the plate members 18a that faces the exterior of the room when the blind A is in the closed position is configured as a transparent (or substantially transparent) plate member 18a made of a resin such as polycarbonate, or glass. The term "transparent" as used herein means being transparent to visible light, that is, being capable of transmitting visible light. The slat body 18 of the slat 5 of the present invention does not necessarily have to be composed of the two plate members 18a bonded to each other, but may be a one-piece member made of a resin, glass, etc. Further, the plate member 18a does not necessarily have to be transparent, but may be made of a non-transparent resin, wood, a metal, etc.

The power extraction units 11 provided at two longitudinal ends of the slat body 18 are electrodes (terminals) through which the electric power generated by the solar cells 10 is extracted. As illustrated in FIGS. 3 and 4, the pair of power extraction units 11 of the present embodiment each include, for example, a covering connector 14 that is connected to the side end of the slat body 18, a pin-shaped electrode shaft 12 that is integrated with the covering connector 14 connected to the slat body 18 and projects in the horizontal lateral direction T1 parallel to the longitudinal direction of the slat body 18, and an extraction electrode part 13 that is integrated with the electrode shaft 12 and is in contact with lead wires (wires; to be detailed later) to allow the electric power generated by the solar cells 10 to be extracted.

Each power extraction unit 11 of the present embodiment, which includes the covering connector 14, the electrode shaft 12, and the extraction electrode part 13, is integrated with the slat body 18 such that, for example, the covering connector 14 holds (covers) side ends of the two plate members 18a forming the slat body 18, and is electrically connected to the closest one of the plurality of solar cells 10 electrically connected to each other. Note that the power extraction unit 11 is not necessarily limited to the configuration described above, as long as it is electrically connected to the plurality of solar cells 10 and includes the extraction electrode part 13 for allowing electric power to be extracted.

The present embodiment includes guide rails 15 that are fixed, with screws or the like, to interior sides of the mullions 2 delimiting the exterior wall opening 1 of the building. The guide rails 15 are configured to guide the slats 5 in the vertical direction T2 to allow the slats 5 to be raised and lowered.

For example, as illustrated in FIG. 2, the guide rail 15 has a side surface facing the side ends of the slats 5 and facing inward in a width direction (T1), the side surface defining a vertically-long opening that extends in the vertical direction T2 and has therein a space functioning as a wiring space 16. The electrode shafts 12 and the extraction electrode parts 13 of the power extraction units 11 projecting from the side ends of the slats 5 are positioned in the wiring space 16 through the vertically-long opening. The guide rail 15 supports the electrode shafts 12 such that the electrode shafts 12 can slide (move forward and backward) in the vertical direction T2 in the wiring space 16. Thus, the guide rails 15 guide the slats 5 in the vertical direction T2, thereby enabling the solar cell blind A of the present embodiment to be opened and closed.

This configuration in which the guide rails 15 hold the electrode shafts 12 of the power extraction units 11 reduces swinging movement of the slats 5 and increases airtightness of an air space 17 between the glass panel 3 and the solar cell blind A, thereby contributing to improvement of heating efficiency of the interior of the room. The inner surface of the guide rail 15 defining the vertically-long opening and the wiring space 16 is coated with an insulating coating that electrically insulates the power extraction units 11 from the guide rail 15. Further, the guide rail 15 is configured to prevent the electrode shafts 12 from being directly exposed to the outside of the guide rail 15 (to the interior of the room) by means of, for example, its shape overlapping with the side ends of the slats 5. Thus, the guide rail 15 protects the power extraction units 11 so as to prevent an electric shock, a short circuit, etc. The electrode shafts 12 have a surface provided with insulation treatment, such as a coating or covering.

Next, reference is made to FIGS. 2, 5 and 6. When viewed from the exterior of the room, in the wiring space 16 of the guide rail 15 in which the power extraction units 11 (left electrodes 11A) projecting from the left side ends of the slats 5 are inserted, a plurality of wires as lead wires 20 (ten lead wires 20 in the present embodiment; first to tenth left lead wires) are fixedly arranged in alignment in the vertical direction T2. Among the ten lead wires 20, one half, i.e., five lead wires 20 are arranged opposite to the other half, i.e., the other five lead wires 20, while the power extraction units 11 (11A) as the left electrodes are interposed between the halves.

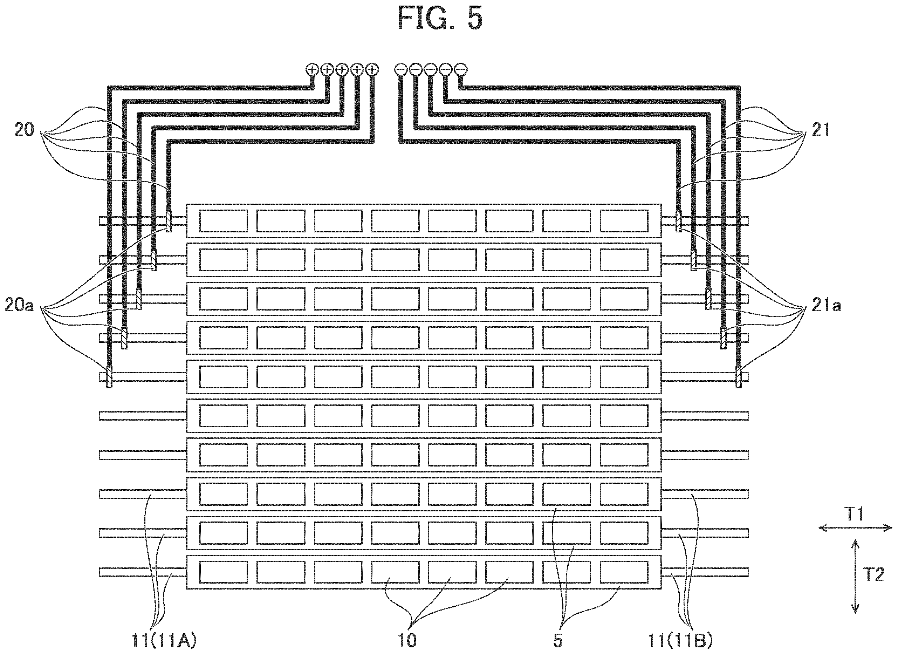

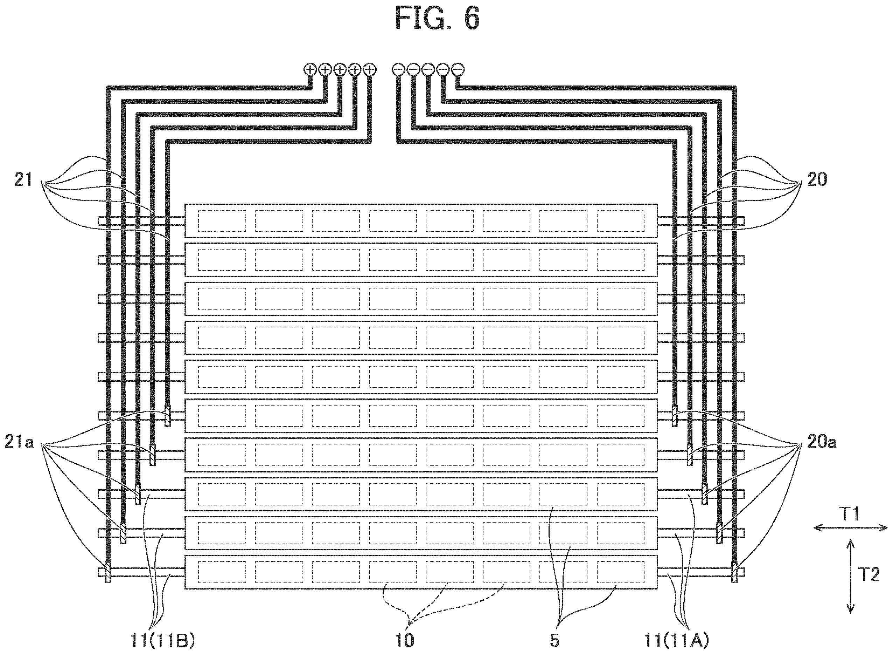

In the wiring space 16 of the different guide rail 15 in which the power extraction units 11 (right electrodes 11B) projecting from the right side ends of the slats 5 are inserted, a plurality of wires as lead wires 21 (ten lead wires 21 in the present embodiment; first to tenth right lead wires) are fixedly arranged in alignment in the vertical direction T2. Like the left lead wires 20, one half, i.e., five lead wires 21 of the ten right lead wires 21 are arranged opposite to the other half, i.e., the other five lead wires 21, while the power extraction units 11 (11B) as the right electrodes are interposed between the halves. Note that FIGS. 5 and 6 illustrate the power extraction units 11, while omitting the covering connectors 14 and the extraction electrode parts 13.

In the present embodiment, each and every lead wire 20, 21 has a current-conducting portion 20a, 21a at a height approximately corresponding to where the extraction electrode part 13 of the power extraction unit 11 of an associated one of the slats 5 is positioned in a state where the exterior wall opening 1 is closed with the blind A that has been completely lowered. In each lead wire 20, 21, the current-conducting portion 20a, 21a is a portion in which the lead wire 20, 21 is exposed to be electrically connectable to the extraction electrode part 13 of the associated slat 5, whereas the other portion except for the current-conducting portion 20a, 21a is coated with an insulating coating.

The pair of left and right lead wires (a positive lead wire and a negative lead wire) 20 and 21 that are in contact with the pair of power extraction units 11 provided at the two side ends of each of slats 5 are connected to a load to which the electric power generated by the solar cells 10 is supplied.

Here, a configuration is conceivable in which the plurality of solar cells 10 of each slat 5 are connected in series to each other, one wire passes through the wiring space 16 of each guide rail 15, and the entire wire in each wiring space 16 is configured to serve as the current-conducting portions 20a and 21a, through which the solar cells 10 of one slat 5 are connected in parallel to the solar cells 10 of the other slats 5. This configuration makes it possible to extract the electric power more easily and more suitably than a configuration in which the plurality of solar cells 10 of the slat 5 are connected in parallel to each other.

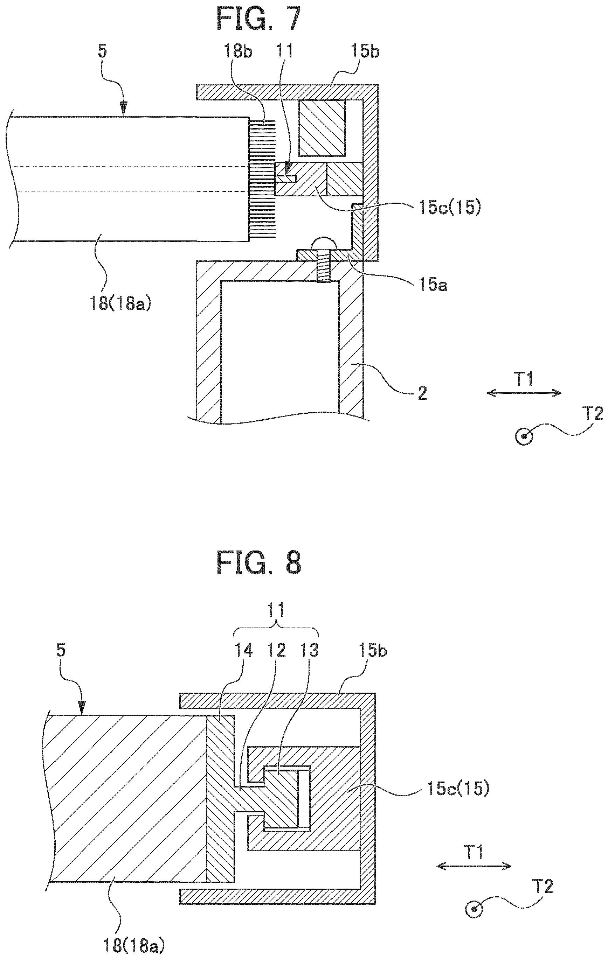

The guide rail 15 is not necessarily limited to the configuration described in the present embodiment. For example, as illustrated in FIGS. 7 and 8, the guide rail 15 may include a mounting base 15a, an outer frame 15b, and a power extraction rail (wire) 15c as the guide rail 15. The power extraction rail 15c holds the electrode shafts 12 and the extraction electrode parts 13 of the power extraction units 11 such that the electrode shafts 12 and the extraction electrode parts 13 can slide in the vertical direction T2. In this case, the power extraction rail 15c may be provided with a conductive part (wire) integrated therewith so that the power extraction rail 15c itself can allow the electric power generated by the solar cells 10 to be extracted therethrough.

The power extraction rail 15c may be configured as a member separate from the outer frame 15b. With this configuration, the blind can be satisfactorily installed in the following manner. The mounting base 15a is attached to an existing sash or an existing frame forming part of a curtain wall, and then, the blind is mounted. Thereafter, the outer frame 15b is mounted to cover the end of the blind (the ends of the plurality of slats 5) and the power extraction rail 15c.

The outer frame 15b and the power extraction rail 15c can be suitably coupled to each other via, for example, a retainer, such as an engaging hook, and a retainer receiver engageable with the retainer. The retainer may be provided to one of the outer frame 15b and the power extraction rail 15c and the retainer receiver may be provided to the other. The coupling can be achieved by fitting and engaging the retainer into and with the retainer receiver. Alternatively, the outer frame 15b may be coupled to the power extraction rail 15c via a separate component, such as an adhesive for bonding them together or screws for fastening them together.

In the case of the configuration illustrated in FIG. 8, the power extraction rail 15c that is separate from the outer frame 15b and has an outer portion made of an insulating material is attached, thereby making it possible to more reliably avoid undesirable current conduction and a short circuit even if the outer frame 15b is made of a metal material. Further, the outer frame 15b that conceals the portion where the wire extends can improve the design property and makes it possible to more reliably prevent undesirable current conduction and a short circuit.

Moreover, as illustrated in FIG. 7, mohair 18b may be attached to the ends of the slat body 18 such that dust or the like settled on the power extraction rail 15c and the power extraction units 11 can be removed.

Meanwhile, in the solar cell blind A of the present embodiment, the extraction electrode parts 13 projecting from the power extraction units 11 provided at the two side ends of each of the slats 5 come into or out of contact with the current-conducting portions 20a, 21a of the lead wires 20, 21 according to an angle of the slats 5. Thus, the extraction electrode parts 13 constitute a principal component of a current conduction state-switching mechanism (a current conduction state-switching mechanism of the present invention) that performs switching between a conduction state in which electric power is extracted and a non-conduction state.

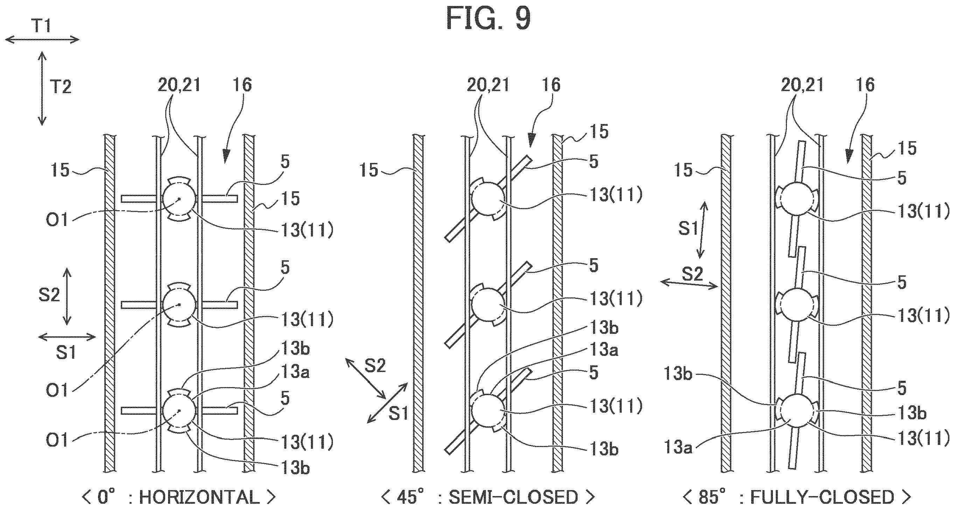

Specifically, as illustrated in FIG. 9, each extraction electrode part 13 of the present embodiment is disposed such that an axis O1 thereof is coaxial with an axis of the associated electrode shaft 12. The extraction electrode part 13 may be attached to the electrode shaft 12, or may be integrated with the electrode shaft 12 in advance.

The extraction electrode part 13 has an axially symmetric shape. The extraction electrode part 13 has a width dimension in one direction S1 that extends across the axis O1 and is perpendicular to the axis O1, and a width dimension in another direction S2 that extends across the axis O1 and is perpendicular to the one direction S1, the width dimension in the one direction S1 being smaller than the width dimension in the other direction S2.

As illustrated in FIG. 9, the extraction electrode part 13 includes, for example, a non-contact portion 13a having a disk shape (a circular columnar shape of a cylindrical shape having a center hole in which the electrode shaft 12 is inserted), and current-conducting contactable portions 13b respectively protruding outward from a periphery of the non-contact portion 13a in the other direction S2 with respect to the axis O1. The current-conducting contactable portions 13b have a circular arc plate shape and respectively extend in the same length along opposite segments of a circumference centered at the axis O1. Accordingly, the extraction electrode part 13 of the present embodiment is configured such that the non-contact portion 13a defines the width dimension in the one direction S1 as a short-length direction while the non-contact portion 13a and the pair of the current-conducting contactable portions 13b define the width dimension in the other direction S2 as a long-length direction.

Each extraction electrode part 13 is integrated with the associated electrode shaft 12 such that when the slat 5 is oriented horizontally, the one direction S1 as the short-length direction becomes parallel to the horizontal lateral direction T1 in which the slat 5 is oriented and the other direction S2 as the long-length direction becomes parallel to the vertical direction T2 in which the guide rail 15 extends.

While the extraction electrode part 13 includes the non-contact portion 13a and the pair of the current-conducting contactable portions 13b, outer circumferential surfaces (outer peripheral regions) of the pair of current-conducting contactable portions 13b do not have to have a curvature equivalent to that of the non-contact portion 13a. Further, the outer circumferential surfaces of the pair of current-conducting contactable portions 13b do not necessarily have to have the shape of an arc surface. Thus, the pair of current-conducting contactable portions 13b are not limited to any particular shape, provided that the outer surfaces of the current-conducting contactable portions 13b can contact with the current-conducting portions 20a, 21a of the lead wires 20, 21 as the wires so as to satisfactorily establish electrical contact, as will be described in detail later.

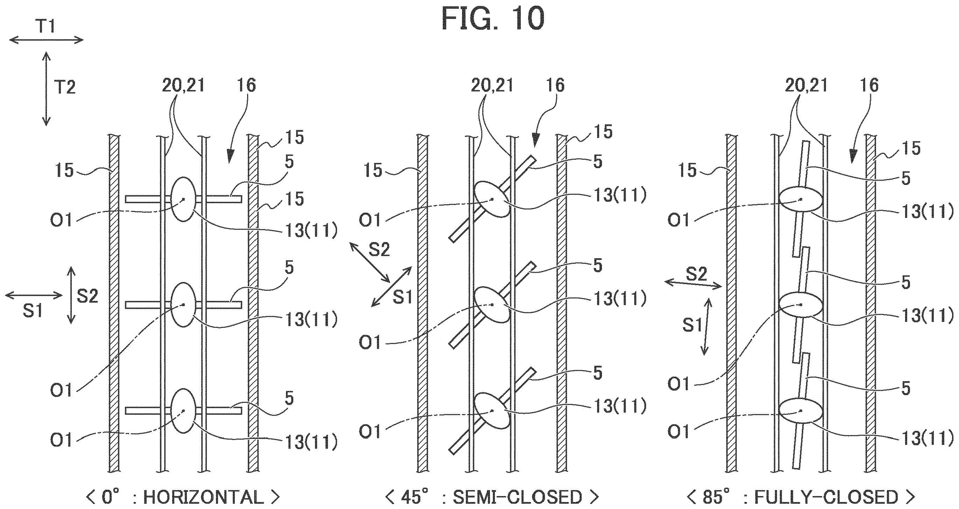

It is only necessary for the extraction electrode part 13 to have different dimensions in the one direction S1 and the other direction S2 that are perpendicular to each other and to have the short-length direction (S1) and the long-length direction (S2). For example, the extraction electrode part 13 may have an elliptic plate shape, as illustrated in FIG. 10.

The solar cell blind A according to the present embodiment having the configuration described above can be brought into a state with low power generation efficiency in which the slats 5 are oriented horizontal as illustrated in FIG. 9 (and FIG. 10). In this state, the short-length direction (S1) of the non-contact portion 13a becomes parallel to the horizontal lateral direction T1 in which the slats 5 are oriented and is directed to the pair of lead wires 20, 21. Thus, the electrode 11 (the outer peripheral regions of the extraction electrode part 13) are out of contact with the current-conducting portions 20a, 21a of the pair of lead wires 20, 21.

On the other hand, in a semi-closed state in which the slats 5 have been turned to be inclined, the pair of current-conducting contactable portions 13b provided in the long-length direction (S2) come close to the current-conducting portions 20a, 21a of the pair of lead wires 20, 21 so that the outer peripheral regions of the current-conducting contactable portions 13b come into contact with the current-conducting portions 20a, 21a. Consequently, the electric power generated by the solar cells 10 of the slats 5 can be supplied thought the lead wires 20, 21 to the load for use.

In the present embodiment, when slats 5 are moved from the semi-closed state to a fully-closed state in which the slates 5 are effectively irradiated with sunlight, the outer surfaces of the pair of current-conducting contactable portions 13b of the extraction electrode part 13 come into firm contact with the lead wires 20, 21, so that the electric power generated by the solar cells 10 can be supplied through the lead wires 20, 21 to the load for use, just like the semi-closed state.

The present embodiment has been described based on an example in which the slats 5 are inclined by 45° and 85° in the semi-closed state and the fully-closed state, respectively. However, the angles for the semi-closed state and the fully-closed state do not have to be limited. A state in which the slats 5 are inclined by an angle smaller than 45° may be referred to as the semi-closed state, provided that the extraction electrode parts 13 are in contact with the pair of lead wires 20, 21 and the electric power can be extracted.

In the solar cell blind A according to the present embodiment, the lead wires 20, 21 are fixedly provided in the wiring spaces 16 of the guide rails 15 that guide the slats 5 in the vertical direction T2. With this feature, the solar cell blind A of the present embodiment can avoid an unwanted situation in which the lead wires 20, 21 become bulky or entangled complicatedly when the slats 5 have been raised and gathered, and which can make it difficult to ensure the wiring space or can cause damage to the lead wires 20, 21.

Further, the solar cell blind A of the present embodiment causes the slats 5 to be oriented horizontally (inclusive of substantially horizontally) when the blind is being opened and closed, i.e., when the slats 5 are raised and lowered. Consequently, the extraction electrode parts 13 of the electrodes 11 and the lead wires 20, 21 can be spaced apart from each other (can be bought into a non-contact state). This feature can prevent the lead wire 20, 21 from coming into friction contact with the electrodes 11 when the blind A is being opened and closed, thereby making it possible for a user to smoothly open and close (raise and lower) the blind A. This feature also makes it possible to prevent damage to the lead wires 20, 21 which can be caused by the opening and closing of the blind A.

For example, a solar cell blind A is conceivable in which the extraction electrode parts 13 are excluded and the electrodes 11 each include a pin-shaped electrode shaft 12 (pin-shaped electrode) that has a circular rod shape and is held between the pair of lead wires 20, 21. Even with this configuration, the electric power generated by the solar cells 10 can be extracted. In this case, however, the lead wires 20, 21 and the pin-shaped electrode shafts 12 (electrodes 11) need to be constantly in contact with each other, and thus, the electrodes 11 may rub against the lead wires 20, 21 when the blind A is being opened and closed. This may give rise to the risk of damage to the lead wires 20, 21 and damage to the electrodes 11 during a long period of use.

In the case of such a solar cell blind A including pin-shaped electrodes 11 held between the pair of lead wires 20, 21, it is difficult to merely maintain the lead wires 20, 21 in constant and stable contact with the pin-shaped electrodes 11 for a long period of use.

In contrast, the solar cell blind A of the present embodiment is capable of switching the extraction electrode parts 13 and the lead wires 20, 21 between the contact state and the non-contact state according to the angle of the slats 5. Thus, the lead wires 20, 21 and the electrodes 11 can be reliably brought into stable contact with each other according to operation to change the angle of the slats, even for a long period of use, thereby making it possible to suitably extract the electric power generated by the solar cells 10. Thus, the present embodiment provides the solar cell blind A that is highly reliable and highly durable.

As a result, the solar cell blind A of the present embodiment makes it possible to extract the electric power generated by the solar cells 10 provided to the slats 5 more reliably and more suitably than the known solar cell blinds, while reducing interference by use of the blind A, such as raising and gathering of the slats 5.

The current-conducting portions 20a, 21a of the lead wire 20 may be imparted with magnetic force such that the current-conducting portions 20a, 21a may attract the extraction electrode parts 13 and contact with the extraction electrode parts 13 by the magnetic force. In this case, the magnetic force to be imparted is adjusted to a level that does not hinder the blind A from being raised and lowered. If such magnetic force is imparted to the current-conducting portions 20a, 21a of the lead wire 20, even when the slats 5 are oriented, for example, horizontally, the magnetic force brings the extraction electrode parts 13 into physical and electrical contact with the current-conducting portions 20a, 21a, thereby enabling the electric power to be extracted. Also in the case of imparting magnetic force to the lead wire 20, the extraction electrode parts 13 (electrode shafts 12) preferably have an elliptic cross section. However, even if the extraction electrode parts 13 (electrode shafts 12) have, for example, a circular or polygonal cross section, the magnetic force can bring the extraction electrode parts 13 into contact with the lead wire 20, thereby making it possible to extract the electric power. Thus, the extraction electrode parts 13 (electrode shafts 12) are not necessarily limited to any particular cross section.

When the solar cell blind A of the present embodiment is used, the air space 17 is formed between the glass panel 3 and the solar cell blind A. In winter, the air space 17 functions as a heat-insulating layer to contribute to improvement of heating efficiency and cooling efficiency of the interior of the room. In summer, the photoelectric effect exerted by the solar cells 10 provided to the slats 5 of the blind A can further reduce a ratio of ingress of solar radiation heat into the interior of the room, in comparison with ordinary blinds.

The two plate members 18a forming the slat 5 may be bonded to each other, while being slightly out of coincidence in the width direction. In this case, the slat 5 has a stepped portion in each of upper and lower end portions in the width direction. In the case where the slat 5 is formed as a one-piece component, a stepped portion may be formed by making the slat 5 have a longitudinal cut in an edge portion thereof. Alternatively, the stepped portion may be formed by cutting the edge portion of the formed slat 5 in the longitudinal direction. When the slats 5 are closed, the stepped portions of one slat 5 engage with the stepped portions of vertically adjacent slats 5, making it unlikely for the adjacent slats 5 to have a gap therebetween. This feature can further increase airtightness of the air space 17 between the glass panel 3 and the solar cell blind A, thereby enabling a further improvement of the heating efficiency and the cooling efficiency of the interior of the room.

Moreover, the guide rail 15 holding the electrode shafts 12 can reduce or prevent swinging movement of the slats 5. This feature can further increase airtightness of the air space 17 between the glass panel 3 and the solar cell blind A, thereby enabling a further improvement of the heating efficiency and the cooling efficiency of the interior of the room.

For example, the embodiment has been described on the assumption that the solar cell blind A is intended for use in a building such as an office building. However, the solar cell blind of the present invention can be mounted to any building. It is naturally possible to use the solar cell blind of the present invention as a blind for a house.

The embodiment has been described on the assumption that the wires of the present invention are the lead wires 20, 21. However, the wires of the present invention may be configured as a different type of wire, such as printed wiring.

The embodiment has been described on the assumption that the electrode shaft 12 and the extraction electrode part 13 that are integrated with and fixed to each other form the electrode 11. On the other hand, the current conduction state-switching mechanism may be formed by configuring the extraction electrode part 13 to be turnable (slidable) partly within a turn region, around the axis O1 with respect to the electrode shaft 12.

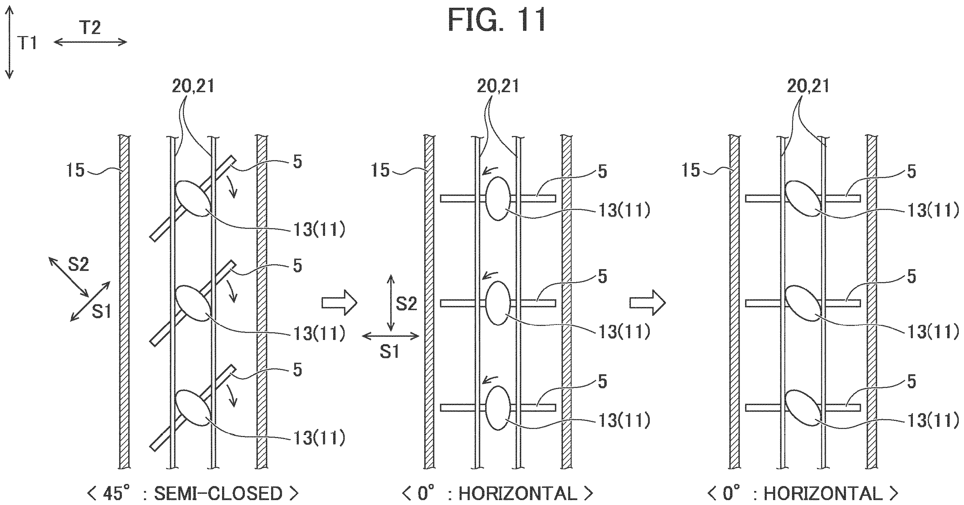

For example, as illustrated in FIG. 11, the extraction electrode part 13 may have an eccentric center of gravity by, for example, incorporating a weight at a position eccentric from the axis O1, or may be provided with a spring member (elastic member) for urging the extraction electrode part 13, a latch, or a stopper. With this configuration, when the slats 5 are oriented horizontally, the long-length direction (S2) of the extraction electrode parts 13 becomes parallel to the vertical direction T2, and the extraction electrode parts 13 independently turn to come into contact with the current-conducting portions 20a, 21a of the lead wires 20, 21. In this case, it is preferable to configure the extraction electrode parts 13 to turn slowly. With this configuration, electric power generated in a state where the slats are oriented horizontally can also be allowed to pass through the lead wires 20, 21 to be extracted.

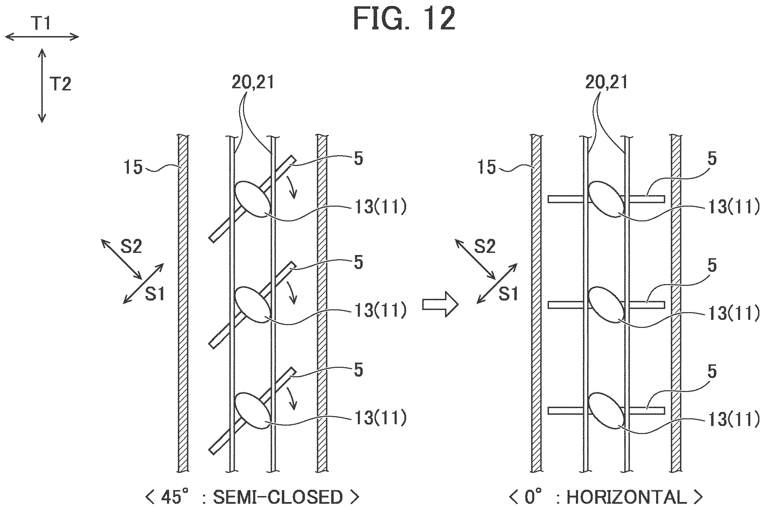

As illustrated in FIG. 12, the slats 5 oriented horizontally are turned to be brought into the semi-closed state in which the extraction electrode parts 13 are in contact with the current-conducting portions 20a, 21a of the lead wires 20, 21 to allow the electric power to be extracted. When the slats 5 in the semi-closed state are turned to be brought into the fully-open state, the range of turn of the slats 5 is, for example, from 45° to 0°. A configuration is possible in which in this range of 45° to 0°, the extraction electrode parts 13 relatively slide and only the electrode shafts 12 turn, while the extraction electrode parts 13 are not allowed to turn together with the electrode shafts 12. In this case, in the range from 45° to 0° corresponding to turn of the slats 5 from the semi-closed state to the fully-open state in which the slats 5 are oriented horizontally, the extraction electrode parts 13 are maintained in contact with the current-conducting portions 20a, 21a of the lead wires 20, 21. Accordingly, even when the slats 5 are oriented horizontally, electric power can be extracted. A pressing force that the extraction electrode parts 13 apply to the lead wires 20, 21 is substantially unchanged (substantially no pressing force is generated). In this case, when the blind A is raised and lowered while having the slats 5 oriented horizontally, the extraction electrode parts 13 automatically turn to come out of contact with the lead wires 20, 21.

### EXPLANATION OF REFERENCE NUMERALS

3: Glass Panel
5: Slat
10: Solar Cell
11: Electrode (Power Extraction Unit)
11A: Left Electrode
11B: Right Electrode
12: Electrode Shaft
13: Extraction Electrode Part (Current Conduction State-Switching Mechanism)
14: Covering Connector
15: Guide Rail
15b: Outer Frame
16: Wiring Space
18: Slat Body
20: Lead Wire (Wire)
20a: Current-Conducting Portion
21: Lead Wire (Wire)
21a: Current-Conducting Portion
A: Solar Battery Blind
O1: Axis
S1: One Direction (Short-Length Direction)
S2: Other Direction (Long-Length Direction)
T1: Horizontal Lateral Direction
T2: Vertical Direction

## Claims

1. A solar cell blind comprising:
a plurality of slats (5) arranged in a vertical direction;
a solar cell (10) integrated with the slat (5);
a pair of electrodes (11) electrically connected to the solar cell (10) and laterally projecting from two side ends of the slat (5);
a pair of guide rails (15) each holding an associated one of the pair of electrodes (11) such that the electrodes (11) are slidable in the vertical direction;
wires (20, 21) fixedly arranged on the guide rails (15) and configured to be electrically connected to the solar cell (10) via the electrodes (11); and
a current conduction state-switching mechanism (13) configured to switch the electrodes (11) and the wires (20, 21) between an electrical contact state and a non-contact state according to an angle of the slats (5).

2. The solar cell blind according to claim 1,
wherein the electrode (11) includes
a covering connector provided to cover the side end of the slat (5),
an electrode shaft (12) laterally projecting from the side end of the slat (5), the electrode shaft (12) being fixed to and integrated with the slat (5), and slidably supported by the guide rail (15), and
an extraction electrode part (13) integrated with the electrode shaft (12) while having an axis thereof being coaxial with that of the electrode shaft (12), the extraction electrode part (13) forming the current conduction state-switching mechanism (13),
wherein the extraction electrode part (13) has an axially symmetric shape, and has a width dimension in one direction that extends across the axis and is perpendicular to the axis and a width dimension in an other direction that extends across the axis and is perpendicular to the one direction, the width dimension in the one direction being smaller than the width dimension in the other direction, and
wherein outer peripheral regions of the extraction electrode part (13) in the other direction are configured to come into electrical contact with the wires (20, 21) according to the angle of the slats (5).

3. The solar cell blind according to claim 2, further comprising:
an outer frame disposed to cover the guide rail (15) and at least the extraction electrode part (13) of the electrode (11) .

## Patentansprüche

1. Solarzellenjalousie, die Folgendes umfasst:
eine Vielzahl von in einer vertikalen Richtung angeordneten Lamellen (5);
eine in die Lamelle (5) eingebaute Solarzelle (10);
ein Paar Elektroden (11), die mit der Solarzelle (10) elektrisch verbunden sind und von zwei Seitenenden der Lamelle (5) quer vorstehen;
ein Paar Führungsschienen (15), die je eine zugeordnete des Paars Elektroden (11) halten, sodass die Elektroden (11) in der vertikalen Richtung verschiebbar sind;
Drähte (20, 21), die fest auf den Führungsschienen (15) angeordnet und konfiguriert sind, um über die Elektroden (11) elektrisch mit der Solarzelle (10) verbunden zu sein; und
einen Stromleitungszustandumschaltmechanismus (13), der konfiguriert ist, um die Elektroden (11) und die Drähte (20, 21) in Abhängigkeit von einem Winkel der Lamellen (5) zwischen einem elektrischen Kontaktzustand und einem Nichtkontaktzustand umzuschalten.

2. Solarzellenjalousie nach Anspruch 1,
wobei die Elektrode (11) Folgendes enthält:
ein abdeckendes Verbindungsstück, das zum Abdecken des Seitenendes der Lamelle (5) vorgesehen ist,
einen Elektrodenschaft (12), der von dem Seitenende der Lamelle (5) quer vorsteht, wobei der Elektrodenschaft (12) an der Lamelle (5) befestigt und in sie eingebaut ist und von der Führungsschiene (15) gleitend getragen wird, und
ein in den Elektrodenschaft (12) eingebautes Extraktionselektrodenteil (13), dessen Achse mit derjenigen des Elektrodenschafts (12) übereinstimmt, wobei das Extraktionselektrodenteil (13) den Stromleitungszustandumschaltmechanismus (13) bildet,
wobei das Extraktionselektrodenteil (13) eine achsensymmetrische Form und eine Breitenabmessung in einer Richtung, die quer zu der Achse verläuft und senkrecht auf der Achse steht, und eine Breitenabmessung in einer anderen Richtung, die quer zu der Achse verläuft und senkrecht auf der einen Richtung steht, aufweist, wobei die Breitenabmessung in der einen Richtung kleiner ist als die Breitenabmessung in der anderen Richtung, und
wobei Außenrandbereiche des Extraktionselektrodenteils (13) in der anderen Richtung so konfiguriert sind, dass sie in Abhängigkeit von dem Winkel der Lamellen (5) mit den Drähten (20, 21) in elektrischen Kontakt kommen.

3. Solarzellenjalousie nach Anspruch 2, die ferner Folgendes umfasst:
einen Außenrahmen, der so platziert ist, dass er die Führungsschiene (15) und mindestens das Extraktionselektrodenteil (13) der Elektrode (11) abdeckt.

## Revendications

1. Store à cellules solaires, comprenant :
une pluralité de lamelles (5) agencées dans une direction verticale ;
une cellule solaire (10) incorporée dans la lamelle (5) ;
une paire d'électrodes (11) électriquement connectées à la cellule solaire (10) et faisant saillie latéralement à partir de deux extrémités latérales de la lamelle (5) ;
une paire de rails de guidage (15) retenant chacun une associée de la paire d'électrodes (11) de telle sorte que les électrodes (11) puissent coulisser dans la direction verticale ;
des fils (20, 21) agencés de façon fixe sur les rails de guidage (15) et configurés pour être électriquement connectés à la cellule solaire (10) par l'intermédiaire des électrodes (11) ; et
un mécanisme de permutation d'état de conduction de courant (13) configuré pour permuter les électrodes (11) et les fils (20, 21) entre un état de contact électrique et un état de non-contact selon un angle des lamelles (5).

2. Store à cellules solaires selon la revendication 1, dans lequel l'électrode (11) inclut
un connecteur de couverture prévu pour couvrir l'extrémité latérale de la lamelle (5),
une tige d'électrode (12) faisant saillie latéralement à partir de l'extrémité latérale de la lamelle (5), la tige d'électrode (12) étant fixée à et incorporée dans la lamelle (5), et supportée de façon coulissante par le rail de guidage (15), et
une partie d'électrode d'extraction (13) incorporée dans la tige d'électrode (12) tout en ayant un axe de celle-ci coaxial avec celui de la tige d'électrode (12), la partie d'électrode d'extraction (13) formant le mécanisme de permutation d'état de conduction de courant (13),
dans lequel la partie d'électrode d'extraction (13) a une forme axialement symétrique, et a une dimension de largeur dans une direction qui s'étend à travers l'axe et est perpendiculaire à l'axe et une dimension de largeur dans une autre direction qui s'étend à travers l'axe et est perpendiculaire à l'une direction, la dimension de largeur dans l'une direction étant plus petite que la dimension de largeur dans l'autre direction, et
dans lequel des régions périphériques extérieures de la partie d'électrode d'extraction (13) dans l'autre direction sont configurées pour entrer en contact électrique avec les fils (20, 21) selon l'angle des lamelles (5).

3. Store à cellules solaires selon la revendication 2, comprenant en outre :
un cadre extérieur disposé pour couvrir le rail de guidage (15) et au moins la partie d'électrode d'extraction (13) de l'électrode (11).
